# EUROPÄISCHE PATENTANMELDUNG

(11) **EP 2 727 773 A1**
(43) Veröffentlichungstag der Anmeldung: **07.05.2014**
(21) Anmeldenummer: 13187525.4
(22) Anmeldetag: 07.10.2013
(51) Int. Cl.: B60R 16/037

(54) **Verfahren zum Aktivieren einer Sprachinteraktion mit einem Insassen eines Fahrzeugs und Sprachinteraktionssystem für ein Fahrzeug**

(30) Priorität: 06.11.2012 DE 102012220131
(71) Anmelder: ROBERT BOSCH GMBH, 70442 Stuttgart (DE)
(72) Erfinder: Schiek, Ulrich, 30519 Hannover (DE); Ibele, Philipp, 89250 Senden (DE)

(57) **Zusammenfassung**

Die Erfindung betrifft ein Verfahren zum Aktivieren einer Sprachinteraktion mit einem Insassen (104, 106) eines Fahrzeugs (100). Das Verfahren umfasst einen Schritt des Ermittelns einer Ausgabeinformation (120), basierend auf einer relevanten Sprachäußerung (118) des Insassen, einen Schritt des Beurteilens einer aktuellen Verkehrssituation, basierend auf zumindest einer Fahrzeugumgebungsinformation zumindest eines Sensors des Fahrzeugs (100), und einen Schritt des Bereitstellens der Ausgabeinformation (120) an einer Schnittstelle zu einer Ausgabeeinrichtung (116) des Fahrzeugs (100), wenn in dem Schritt des Beurteilens die Verkehrssituation als unkritisch beurteilt wurde.

## Beschreibung

### Stand der Technik

Die vorliegende Erfindung bezieht sich auf ein Verfahren zum Aktivieren einer Sprachinteraktion mit einem Insassen eines Fahrzeugs, auf ein entsprechendes Sprachinteraktionssystem sowie auf ein entsprechendes Computerprogrammprodukt.

In vielen Fahrzeugen werden heute Fahrservicesysteme eingesetzt, die den Fahrer eines Fahrzeugs beim sicheren Führen des Fahrzeugs unterstützen können.

Beispielsweise offenbart die DE 10 2009 032 735 A1 eine Vorrichtung zur Wiedergabe von Musikdaten in einem Fahrzeug. Die zugehörige Musik wird in Aktivierungsgrade, beispielsweise "beruhigend", "moderat" und "aktivierend", kategorisiert. Die Vorrichtung kann aufgrund von Daten zur Verkehrssituation und/oder zur Verfassung des Fahrers entscheiden, welcher Aktivierungsgrad der wiederzugebenden Musik zugrundezulegen ist.

### Offenbarung der Erfindung

Vor diesem Hintergrund wird mit der vorliegenden Erfindung ein Verfahren zum Aktivieren einer Sprachinteraktion mit einem Insassen eines Fahrzeugs, weiterhin ein Sprachinteraktionssystem, das dieses Verfahren verwendet sowie schließlich ein entsprechendes Computerprogrammprodukt gemäß den Hauptansprüchen vorgestellt. Vorteilhafte Ausgestaltungen ergeben sich aus den jeweiligen Unteransprüchen und der nachfolgenden Beschreibung.

Gemäß dem hier vorgestellten Konzept wird eine automatische Sprachinteraktion eines Fahrzeuginformationssystems mit einem Benutzer eines Fahrzeugs ermöglicht. Unter Berücksichtigung einer aktuellen Nutzersituation kann die Sprachinteraktion dann gestartet bzw. durchgeführt werden, wenn es für den Nutzer hinsichtlich der Situation günstig ist. So kann das System ausgebildet sein, um eine Komplexität und/oder Gefährlichkeit einer Verkehrssituation zu identifizieren und nur in relativ unkritischen Situationen zu interagieren. Insbesondere betrifft das vorgestellte Konzept ein Sprachbediensystem, das pro-aktiv mit dem Benutzer des Fahrzeugs kommunizieren kann; es bedarf also keinerlei Aktion des Nutzers wie beispielsweise eines Telefonanrufs o.ä., um das System zu aktivieren. In einer Weiterbildung kann das System ferner ausgebildet sein, um außerdem einen Workload bzw. eine Auslastung des Benutzers bzw. Fahrers zu identifizieren, beispielsweise mittels Informationen von Fahrerassistenzsystemen, über eine Bedienung von Schaltern, etc.

Gemäß dem hierin vorgestellten Konzept können Komfort und Fahrsicherheit wesentlich verbessert werden, da der Fahrer eines Fahrzeugs auf eine manuelle Systembedienung vollständig verzichten kann und nicht durch mit dem Fahrgeschehen nicht zusammenhängende Überlegungen in seiner Konzentration gestört wird.

Ein Verfahren zum Aktivieren einer Sprachinteraktion mit einem Insassen eines Fahrzeugs weist die folgenden Schritte auf:
Ermitteln einer Ausgabeinformation, basierend auf einer relevanten Sprachäußerung des Insassen;
Beurteilen einer aktuellen Verkehrssituation, basierend auf zumindest einer Fahrzeugumgebungsinformation zumindest eines Sensors des Fahrzeugs; und
Bereitstellen der Ausgabeinformation an einer Schnittstelle zu einer Ausgabeeinrichtung des Fahrzeugs, wenn in dem Schritt des Beurteilens die Verkehrssituation als unkritisch beurteilt wurde.

Die Sprachinteraktion kann von einem Sprachinteraktionssystem bereitgestellt werden, das ausgebildet ist, um das Verfahren auszuführen. Das Sprachinteraktionssystem kann in dem Fahrzeug installiert sein. Auch kann das Sprachinteraktionssystem auf einem mobilen Gerät, beispielsweise auf einem Smartphone realisiert sein, sodass das beschriebene Verfahren auch bei Smartphonekopplung (z. B. Mirorlink) ausgeführt werden kann. Unter dem Sprachinteraktionssystem kann eine Anordnung verstanden werden, mit der dem Insassen oder mehreren Insassen des Fahrzeugs relevante Serviceleistungen erbracht werden können. Beispielsweise können zu einem bestimmten Zeitpunkt oder in einem bestimmten Zeitrahmen der Fahrt die Insassen des Fahrzeugs mit wichtigen Informationen versorgt werden oder Aufträge in deren Sinne erledigt werden. Das Sprachinteraktionssystem kann ausgebildet sein, um sowohl Informationen von dem oder den Insassen zu empfangen und zu verarbeiten, als auch den oder die Insassen des Fahrzeugs mit Informationen oder Diensten zu versorgen. Das Sprachinteraktionssystem kann ausgebildet sein, um mit dem oder den Insassen in einem gegenseitigen Informationsaustausch zu interagieren. Wie die Bezeichnung bereits andeutet, bedient sich das Sprachinteraktionssystem dabei des Mediums der Sprache, und zwar in schriftlicher oder mündlicher Form. Beispielsweise kann das Sprachinteraktionssystem ausgebildet sein, um einer Unterhaltung der Insassen zu folgen und eine relevante Sprachäußerung innerhalb der Unterhaltung mithilfe eines Logikmoduls im Sinne eines Arbeitsauftrags für das System einzuordnen. Gemäß dem Arbeitsauftrag kann eine geeignete Ausgabeinformation an den oder die Insassen formuliert werden. Die Sprachäußerung kann über ein im Fahrzeuginnenraum installiertes und in das Verfahren eingebundenes Mikrofon erfasst werden. Bei dem Fahrzeug kann es sich um ein beliebiges Verkehrsmittel zum Transport von Personen oder Gütern, beispielsweise einen Personenkraftwagen oder einen Lastkraftwagen, handeln. Bei dem Insassen kann es sich um einen Fahrer des Fahrzeugs handeln. Weitere Insassen können ein oder mehrere Beifahrer sein. Die Fahrzeugumgebungsinformation kann eine Beschaffenheit eines Umfelds, in dem sich das Fahrzeug aktuell bewegt, repräsentieren. Beispielsweise kann die Fahrzeugumgebungsinformation eine aktuelle Verkehrsdichte, eine aktuell befahrene Straßenklasse oder eine aktuelle Wettersituation betreffen. Bei den Sensoren kann es sich um Teile eines Kamerasystems, eines Radargeräts oder z. B. um Beschleunigungssensoren des Fahrzeugs handeln. In dem Schritt des Beurteilens kann die aktuelle Verkehrssituation unter Verwendung der Fahrzeugumgebungsinformation insbesondere dahin gehend bewertet werden, welches Maß an Aufmerksamkeit sie dem Fahrer des Fahrzeugs abverlangt, damit dieser das Fahrzeug sicher durch das Verkehrsgeschehen steuern kann. Dieses Maß kann beispielsweise durch einen Abgleich der aktuellen Verkehrssituation mit einem entsprechenden hinterlegten Aufmerksamkeitswert bestimmt werden. Dabei können z. B. durchschnittliche im Laborversuch bestätigte Aufmerksamkeitswerte zugrunde gelegt werden. Für den Schritt des Bereitstellens kann die Verkehrssituation beispielsweise dann als unkritisch beurteilt werden, wenn der entsprechende Aufmerksamkeitswert einen Maximalwert nicht überschreitet. Bei der Ausgabeeinrichtung kann es sich um einen Lautsprecher oder auch einen Bildschirm eines Anzeigegeräts des Fahrzeugs handeln, sodass die Ausgabeinformation wahlweise als gesprochener oder geschriebener Text oder in beiden Formen simultan an den oder die Insassen ausgegeben werden kann. Die Schritte des Ermittelns, Beurteilens und Bereitstellens können unter Verwendung eines geeigneten Algorithmus ausgeführt werden.

Gemäß einer Ausführungsform kann das Verfahren einen Schritt des Bestimmens der relevanten Sprachäußerung aufweisen. In dem Schritt des Bestimmens kann ein vorbestimmtes Wort oder eine vorbestimmte Wortfolge erfasst und als relevante Sprachäußerung bestimmt werden, wenn das Wort mit einem in einer Datenbank hinterlegten Wort übereinstimmt oder die Wortfolge mit einer in der Datenbank hinterlegten Wortfolge übereinstimmt. Das vorbestimmte Wort oder die vorbestimmte Wortfolge kann in einer dem Verfahren zur Verfügung stehenden Datenbank hinterlegt sein. Die Datenbank kann beispielsweise typische Wörter oder Satzbausteine aufweisen, die im Zusammenhang mit einer Autofahrt von Bedeutung sein können, wie z. B. Begriffe oder Ausdrücke mit Wortformen von "Essen", "Tanken", "Hotel", "Übernachten", etc. Darüber hinaus kann die Datenbank ausgebildet sein, um über im Fahrzeug geführte Gespräche um spezifische Begriffe und Ausdrücke erweitert und so kundenspezifisch angepasst werden zu können. Tankt der Benutzer des Verfahrens beispielsweise bevorzugt bei einem bestimmten Betreiber und erwähnt dies auf einer oder mehrerer seiner Fahrten, kann die Datenbank entsprechend um den Ausdruck "xy-Tankstelle" erweitert werden. Insgesamt kann mit dieser Ausführungsform das Verfahren besonders schnell durchgeführt werden und immer präziser ablaufen, je öfter es durchgeführt wird.

Gemäß einer weiteren Ausführungsform kann in dem Schritt des Bestimmens ein vorbestimmtes Sprachschema erfasst und als relevante Sprachäußerung bestimmt werden, wenn das Sprachschema mit einem in einer Datenbank hinterlegten Sprachschema übereinstimmt. Das Sprachschema kann beispielsweise eine Frage oder einen Befehl repräsentieren. Auch mit dieser Ausführungsform kann das Verfahren schnell und effizient durchgeführt werden.

Die beiden vorgenannten Ausführungsformen des Verfahrens ermöglichen insbesondere einen automatischen Einsatz des Verfahrens. Es bedarf also nicht eines Aktivierens des Verfahrens durch einen Nutzer, hier beispielsweise des Fahrers des Fahrzeugs. Der Fahrer kann also während der gesamten Fahrt voll und ganz dem Verkehrsgeschehen widmen und muss dennoch nicht auf wichtige Informationen und Unterstützung verzichten, wenn es darum geht, schnell und mit geringem Aufwand eine geeignete Übernachtungsmöglichkeit oder ein Restaurant zu finden, das den eigenen Vorlieben optimal entspricht.

Entsprechend kann in dem Schritt des Ermittelns ein der relevanten Sprachäußerung zugeordneter Vorschlag oder eine der relevanten Sprachäußerung zugeordnete Frage für den Insassen als die Ausgabeinformation ermittelt werden. Auch für den Schritt des Ermittelns kann auf die vorhinein bereits erwähnte Datenbank zurückgegriffen werden. So kann mit dem hier vorgestellten Verfahren ein effizientes und auf Bedürfnisse des Nutzers optimal zugeschnittenes Servicemodul bereitgestellt werden, das den Nutzer automatisch mit aktuell für ihn nützlichen Informationen versorgt.

Gemäß einer Ausführungsform kann der Schritt des Bereitstellens jedoch auch ansprechend auf ein Kommando des Insassen ausgeführt werden. Auch in diesem Fall wird die relevante Sprachäußerung erfasst und darauf basierend eine Ausgabeinformation ermittelt, der Schritt des Bereitstellens wird jedoch erst ausgeführt, wenn das entsprechende Kommando durch den Nutzer bzw. Insassen erfolgt ist. Dieses Kommando kann z. B. eine sprachliche Äußerung des Insassen sein, beispielsweise eine Frage, die mit dem Wort "System" eingeleitet wird. "System" wäre dann das Kommando zum Bereitstellen der bereits ermittelten Ausgabeinformation. So kann der Nutzer des Verfahrens nach Wunsch steuernd in das Verfahren eingreifen, ohne dafür eine Verzögerung in der Informationsversorgung in Kauf nehmen zu müssen.

Alternativ kann das Verfahren auch ansprechend auf ein Startkommando des Insassen gestartet werden. So kann der Nutzer des Verfahrens die Versorgung mit Informationen oder Diensten ganz nach Bedarf ein- oder ausschalten.

Gemäß einer weiteren Ausführungsform kann das Verfahren einen Schritt des Bewertens einer aktuellen Informationsaufnahmekapazität des Insassen, basierend auf zumindest einer Fahrzeuginnenrauminformation des zumindest einen Sensors des Fahrzeugs, aufweisen. Entsprechend kann in dem Schritt des Bereitstellens die Ausgabeinformation ferner bereitgestellt werden, wenn in dem Schritt des Bewertens die aktuelle Informationsaufnahmekapazität als ausreichend bewertet wurde. Die Informationsaufnahmekapazität kann beispielsweise sensorisch durch Erfassen von beispielsweise Schalter- oder Tastenbetätigungen des Insassen ermittelt werden. Diese Erweiterung des Verfahrens weist den Vorteil auf, dass die Ausgabeinformation nur an den Insassen ausgegeben wird, wenn dieser nicht durch seine Fahraufgabe oder andere Betätigungen zu sehr in Anspruch genommen wird. So kann zum einen verhindert werden, dass der Insasse die Information nicht ausreichend versteht und zum anderen gewährleistet werden, dass die Sicherheit der Fahrt aufgrund einer Ablenkung durch die Informationsausgabe nicht beeinträchtigt wird.

Ferner kann das Verfahren einen Schritt des Erfassens einer Antwortinformation des zumindest einen Insassen des Fahrzeugs aufweisen. Der Schritt des Erfassens kann basierend auf einer weiteren relevanten Sprachäußerung des Insassen durchgeführt werden. Basierend auf dem Schritt des Erfassens der Antwortinformation kann das Verfahren einen Schritt des Deaktivierens der Sprachinteraktion aufweisen. Der Insasse kann die Antwortinformation in Reaktion auf eine bereitgestellte Ausgabeinformation in Form einer Sprachäußerung bereitstellen. Beispielsweise kann die Antwortinformation eine Ablehnung einer angebotenen Information oder eines angebotenen Dienstes repräsentieren. Mit dieser Ausführungsform ist es dem Insassen möglich, das Sprachinteraktionssystem zu jedem beliebigen Zeitpunkt einer Fahrt einfach und schnell ausschalten zu können, ohne dafür einen Tastendruck, oder eine ähnliche Aktion, die ihn vom Verkehrsgeschehen ablenken könnte, ausführen zu müssen.

Ein Sprachinteraktionssystem für ein Fahrzeug weist die folgenden Merkmale auf:
eine Einrichtung zum Ermitteln einer Ausgabeinformation, basierend auf einer relevanten Sprachäußerung zumindest eines Insassen des Fahrzeugs;
eine Einrichtung zum Beurteilen einer aktuellen Verkehrssituation, basierend auf zumindest einer Fahrzeugumgebungsinformation zumindest eines Sensors des Fahrzeugs; und
eine Einrichtung zum Bereitstellen der Ausgabeinformation an einer Schnittstelle zu einer Ausgabeeinrichtung des Fahrzeugs, wenn die Einrichtung zum Beurteilen die Verkehrssituation als unkritisch beurteilt hat.

Das Sprachinteraktionssystem kann Teil eines Fahrassistenzsystems oder Navigationssystems des Fahrzeugs sein oder mit diesem verbunden sein. Das Sprachinteraktionssystem kann durch eine Vorrichtung gebildet sein, die ausgebildet sein kann, um die Schritte des Verfahrens zum Aktivieren eines Sprachinteraktionssystems in den entsprechenden Einrichtungen durchzuführen bzw. umzusetzen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät verstanden werden, das Sensorsignale verarbeitet und in Abhängigkeit davon Steuer-und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programmprodukt auf einem Computer oder einer Vorrichtung ausgeführt wird.

Die Erfindung wird nachstehend anhand der beigefügten Zeichnungen beispielhaft näher erläutert. Es zeigen:
- Fig. 1: eine Prinzipdarstellung eines Fahrzeugs mit einem Sprachinteraktionssystem gemäß einem Ausführungsbeispiel der vorliegenden Erfindung; und
- Fig. 2: ein Ablaufdiagramm eines Verfahrens zum Aktivieren einer Sprachinteraktion gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

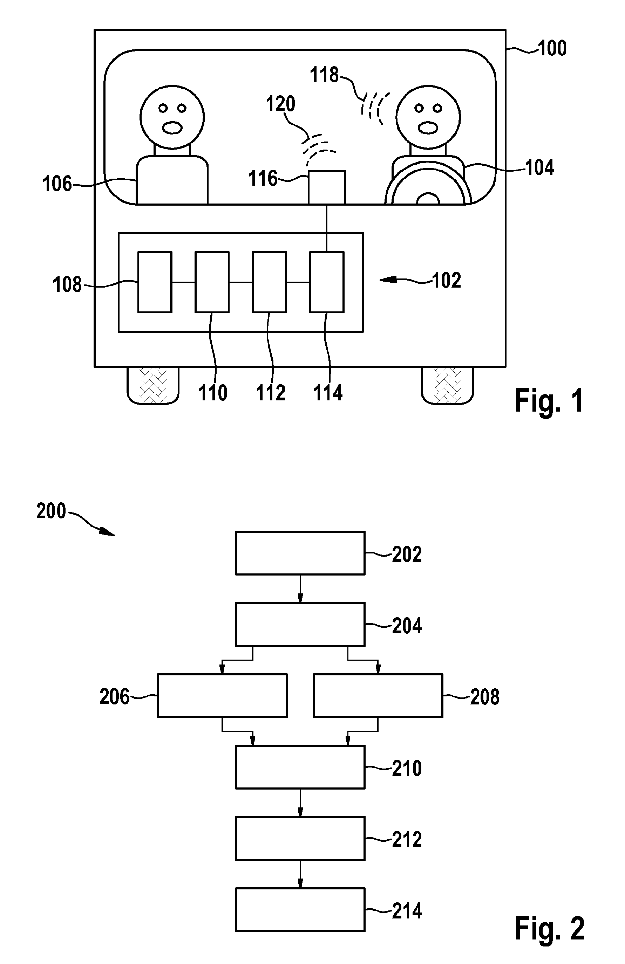

Fig. 1 zeigt in einer Prinzipdarstellung ein Fahrzeug 100, das mit einem Sprachinteraktionssystem 102 gemäß einem Ausführungsbeispiel der vorliegenden Erfindung ausgerüstet ist. Gezeigt sind ein erster Insasse 104 und ein zweiter Insasse 106 des Fahrzeugs 100, die während einer Fahrt des Fahrzeugs 100 ein Gespräch führen. Der erste Insasse 104 ist gleichzeitig der Fahrer des Fahrzeugs 100 und hier der Nutzer eines von dem Sprachinteraktionssystem 102 ausgeführten Verfahrens zum Aktivieren einer Sprachinteraktion. Die Vorrichtung bzw. das Sprachinteraktionssystem 102 umfasst eine Logik 108, eine Einrichtung 110 zum Ermitteln einer Ausgabeinformation, eine Einrichtung 112 zum Beurteilen einer aktuellen Verkehrssituation und eine Einrichtung 114 zum Bereitstellen der Ausgabeinformation an einer Schnittstelle zu einer Ausgabeeinrichtung 116 des Fahrzeugs 100. Bei dem in Fig. 1 gezeigten Ausführungsbeispiel handelt es sich bei der Ausgabeeinrichtung 116 um einen Innenraumlautsprecher des Fahrzeugs 100. Über die Logik 108 ist das Sprachinteraktionssystem 102 in der Lage, aus der Unterhaltung heraus eine relevante Sprachäußerung 118 - hier geäußert von dem Fahrer 104 - inhaltlich auszuwerten und zu bestimmen. Basierend auf der relevanten Sprachäußerung 118 ermittelt die Einrichtung 110 eine geeignete Ausgabeinformation 120, die über die Einrichtung 114 an einer Schnittstelle zu dem Innenraumlautsprecher 116 bereitgestellt wird. Die Ausgabeinformation 120 kann immer oder nur bei Vorliegen einer bestimmten Bedingung bereitgestellt werden, beispielsweise wenn die Einrichtung 112 eine aktuelle Verkehrssituation als unkritisch beurteilt hat. Letzteres stellt einen optionalen, für den Fahrer jedoch unter Umständen komfortablen Zusatz dar.

Wie die Darstellung in Fig. 1 zeigt, unterhalten sich der erste Insasse bzw. der Fahrer 104 und der zweite Insasse bzw. der Beifahrer 106. Das Sprachinteraktionssystem 102 folgt permanent der Unterhaltung und wertet diese über die Logik 108 aus. Die Logik 108 kann z. B. nach Stichwörtern suchen oder bekannte Frageschemata erkennen. Mittels der Logik 108 ermittelte Informationen bzw. relevante Sprachäußerungen 118 speichert das Sprachinteraktionssystem 102 in einer langfristig gepflegten Datenbank. Dabei ist das Sprachinteraktionssystem 102 in der Lage, eine aktuelle Situation oder Kommunikation mit vorherigen Interaktionen in Verbindung zu bringen. Das Sprachinteraktionssystem 102 hat weiterhin Zugriff auf externe Datenbanken und/oder andere Informationsquellen, z. B. Internet, Lexika, etc., über die es sich weitere Informationen holen kann. Das Sprachinteraktionssystem 102 ist in der Lage, von sich aus pro-aktiv mit dem Nutzer 104 in Kommunikation zu treten. Anstelle des Fahrers 104 kann selbstverständlich auch der Beifahrer 106 oder ein anderer Insasse Nutzer des von dem Sprachinteraktionssystem 102 ausgeführten Verfahrens sein.

Fig. 2 zeigt ein Ablaufdiagramm eines Ausführungsbeispiels eines Verfahrens 200 zum Aktivieren einer Sprachinteraktion mit einem Insassen eines Fahrzeugs. In einem Schritt 202 wird ein aus einem Gespräch zwischen Insassen eines Fahrzeugs erfasstes Wort, eine erfasste Wortfolge und/oder ein erfasstes Sprachschema als eine relevante Sprachäußerung bestimmt. Basierend auf der relevanten Sprachäußerung wird in einem Schritt 204 eine geeignete Ausgabeinformation ermittelt. Die Ausgabeinformation kann beispielsweise einen Vorschlag oder eine Frage an den oder die Insassen repräsentieren, der oder die mit der relevanten Sprachäußerung in einem sinnvollen Kontext steht und für den oder die Insassen einen erstrebenswerten Informationsmehrwert oder einen erstrebenswerten Dienst darstellt. In einem Schritt 206 wird basierend auf Sensordaten des Fahrzeugs eine aktuell bestehende Verkehrssituation beurteilt. Bei dem hier dargestellten Ausführungsbeispiel des Verfahrens 200 wird parallel zu dem Schritt 206 ein Schritt 208 durchgeführt, in dem basierend auf ebenfalls von Sensoren des Fahrzeugs bereitgestellten Fahrzeuginnenrauminformationen eine aktuelle Informationsaufnahmekapazität eines Insassen des Fahrzeugs, bei dem es sich um den Fahrer handelt, bewertet wird. Alternativ können die Schritte 206 und 208 auch in beliebiger Reihenfolge nacheinander ausgeführt werden oder es kann nur einer der Schritte 206, 208 ausgeführt werden, ohne dass der andere der Schritte 206, 208 ausgeführt wird. Es erfolgt in einem Schritt 210 ein Bereitstellen der Ausgabeinformation an einer Schnittstelle zu einer Ausgabeeinrichtung des Fahrzeugs, wenn in dem Schritt 206 die Verkehrssituation als unkritisch beurteilt wurde und in dem Schritt 208 die aktuelle Informationsaufnahmekapazität als ausreichend bewertet wurde. Alternativ kann der Schritt 210 des Bereitstellens der Ausgabeinformation auch ansprechend auf ein Kommando eines der Insassen durchgeführt werden. Bei dem in Fig. 2 gezeigten Ausführungsbeispiel des Verfahrens 200 ist in einem Schritt 212 eine Möglichkeit einer Erfassung einer auf einer weiteren relevanten Sprachäußerung basierenden Antwortinformation des Insassen des Fahrzeugs gegeben. Es erfolgt in einem Schritt 214 eine Deaktivierung des Sprachinteraktionssystems, wenn die Antwortinformation ein Deaktivierungskommando repräsentiert. Zur Reaktivierung der Sprachinteraktion bedarf es dann eines Sprach- oder HMI-Kommandos durch den Nutzer des Verfahrens 200. In einer alternativen Ausführungsform kann das Verfahren 200 auch so konzipiert sein, dass es explizit nur ansprechend auf ein Startkommando des Insassen gestartet wird.

Mit der in dem Schritt 208 durchgeführten Bewertung der aktuellen Informationsaufnahmekapazität wird die Möglichkeit geschaffen, neben dem aktuellen Gefährdungsgrad durch die Verkehrssituation die "Arbeitsbelastung" bzw. den "Workload" des Fahrers zu bewerten und damit auf die Nutzerbelastung zu schließen. Hierzu werden Parameter wie etwa eine Fahrzeuggeschwindigkeit, eine Straßenklasse, ein Abstand zu einem vorausfahrenden Fahrzeug, eine Beschaffenheit nächster Routenabschnitte bzw. vorausliegender Kurven, aktuelle Beschleunigungswerte (ESP, etc.), eine Wettersituation, Fahrerassistenzsysteme und eine aktuelle Bedienung von Gerätschaften bewertet und in einer sinnvollen Größe verrechnet. Die Parameter werden in abhängig von dem Verkehrsmittel, für das das Verfahren ausgeführt wird, z. B. Automobil, Bus, Flugzeug, Fahrrad, etc., ausgewählt. Eine Nutzerinteraktion via Sprache gemäß Schritt 210 des Verfahrens 200 wird nur aktiv gestartet, wenn in einem sinnvollen Zeitfenster die Bewertung der Situation unterhalb eines kritischen Werts B_kritisch_max bleibt.

In einer alternativen Ausführungsform des Verfahrens 200 kann der Wert B_kritisch_max durch den Nutzer konfiguriert werden. In einer weiteren alternativen Ausführungsform des Verfahrens 200 kann für den Schritt 210 des Bereitstellens der Ausgabeinformation auch eine Information über einen Zustand bzw. Stresslevel des Fahrers bzw. Nutzers mit berücksichtigt werden.

Im Folgenden sei ein beispielhaftes Gespräch zwischen Fahrzeuginsassen, beispielsweise des Fahrers 104 und des Beifahrers 106 aus Fig. 1 wiedergegeben, um das hierin vorgestellte Konzept einer Situationsbewertung zur Steuerung einer aktiven Sprachinteraktion anschaulich zu erläutern. Die exemplarische Unterhaltung findet während einer Fahrt um 17:30 Uhr in dem mit dem Sprachinteraktionssystem 102 ausgestatteten Fahrzeug 100 statt und betrifft einen Essenswunsch von Fahrer 104 und Beifahrer 106.
Fahrer 104: "Ich habe Hunger."
Beifahrer 106: "Was würdest du gerne essen?"
Fahrer 104: "Mal wieder Thailändisch?"

Hier erkennt das Sprachinteraktionssystem 102 aus der Konversation heraus ein bekanntes Frageschema 118 und startet gemäß dem Schritt 210 des Verfahrens 200 aus Fig. 2 eine selbstständige Interaktion.

Sprachinteraktionssystem 102: "Soll ich Ihnen ein thailändisches Restaurant vorschlagen, etwa wieder das Suki-Yaki?"
(Das Sprachinteraktionssystem 102 weiß aus einer Datenbank, dass der Nutzer 104 schon mehrfach im Suki-Yaki war.)

An dieser Stelle bestehen gemäß einer Ausführungsform des Verfahrens 200 aus Fig. 2 drei verschiedene Möglichkeiten für einen weiteren Ablauf des Verfahrens.

In einem ersten Fall A möchte der Fahrer 104 den von dem Sprachinteraktionssystem 102 bereitgestellten Dienst, hier Hilfe bei der Restaurantsuche, in Anspruch nehmen und leitet durch eine entsprechende Antwort den folgenden weiteren Ablauf des Verfahrens 200 ein:
Fahrer 104: "Ja, das Suki-Yaki wäre toll."
Sprachinteraktionssystem 102: "Das Suki-Yaki hat ab 18:00 Uhr geöffnet. Soll ich Ihnen für zwei Personen einen Tisch um 18:00 Uhr reservieren?"
(Das System kennt die Öffnungszeiten, z. B. aus dem Internet, die Personenzahl im Auto 100 und die Uhrzeit sowie die Fahrzeit zum Restaurant.)

In einem zweiten Fall B möchte der Nutzer 104 die Dienste des Sprachinteraktionssystems 102 prinzipiell in Anspruch nehmen, jedoch nicht zu diesem Zeitpunkt oder nicht im Zusammenhang mit dem Thema Essen. Wiederum leitet er mit einer entsprechenden Antwort den weiteren Ablauf des Verfahrens ein:
Fahrer 104: "Nein, danke."
Sprachinteraktionssystems 102 bleibt nun ruhig, arbeitet aber weiter und wird bei späteren Gelegenheiten wieder interagieren.

In einem dritten Fall C schließlich möchte der Fahrer 104 das Sprachinteraktionssystem 102 deaktivieren und äußert ein entsprechendes Deaktivierungskommando, das gemäß dem Schritt 212 des Verfahrens 200 erfasst wird und eine Deaktivierung des Sprachinteraktionssystems 102 in dem Schritt 214 des Verfahrens bewirkt:
Fahrer 104: "Nicht stören, bitte."
Das Sprachinteraktionssystem 102 mischt sich in laufende Diskussion nicht mehr ein. Für einen Neustart des Verfahrens 200 ist gegebenenfalls eine Nutzer-Reaktivierung notwendig.

Prinzipiell kann das Verfahren 200 so konzipiert sein, dass die Sprachunterstützung für einzelne Themengebiete - wie oben am Beispiel der Restaurantsuche veranschaulicht - vom Nutzer 104 konfiguriert, also z. B. an- bzw. abgeschaltet, werden kann.

Das Sprachinteraktionssystem 102 kann konfiguriert sein, um in mindestens drei Aktivitätszustände geschaltet werden zu können. Beispielsweise folgt in einem ersten Aktivitätszustand das Sprachinteraktionssystem 102 Gesprächen bzw. Situationen und startet selbstständig Interaktionen, wie anhand des Verfahrens 200 in Fig. 2 beschrieben. In einem zweiten Aktivitätszustand kann das Sprachinteraktionssystem 102 ebenfalls Gesprächen bzw. Situationen folgen, allerdings erst auf Nutzerwunsch interagieren. Beispielsweise kann Sprachinteraktionssystem 102 basierend auf einer Frage des Nutzers 104: "System, welche Restaurants kannst du empfehlen?" folgende Antwortinformation bereitstellen: "Ich kenne drei thailändische Restaurants in der näheren Umgebung." In einem dritten Aktivitätszustand kann das Sprachinteraktionssystem 102 z. B. in einer Grundstellung vollständig ausgeschaltet sein und nur über spezielle Sprach- und/oder HMI-Kommandos etc. aktiviert werden.

Ein Einsatz des erfindungsgemäßen Verfahrens 200 zum Aktivieren einer Sprachinteraktion eignet sich bei sämtlichen elektronischen Systemen mit Sprachinteraktionssystem. Insbesondere vorteilhaft ist der Einsatz bei Fahrzeug-Systemen oder Smartphones.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden. Ferner können erfindungsgemäße Verfahrensschritte wiederholt sowie in einer anderen als in der beschriebenen Reihenfolge ausgeführt werden. Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (200) zum Aktivieren einer Sprachinteraktion mit einem Insassen (104, 106) eines Fahrzeugs (100), wobei das Verfahren die folgenden Schritte aufweist:
Ermitteln (204) einer Ausgabeinformation (120), basierend auf einer relevanten Sprachäußerung (118) des Insassen;
Beurteilen (206) einer aktuellen Verkehrssituation, basierend auf zumindest einer Fahrzeugumgebungsinformation zumindest eines Sensors des Fahrzeugs; und
Bereitstellen (210) der Ausgabeinformation an einer Schnittstelle zu einer Ausgabeeinrichtung (116) des Fahrzeugs, wenn in dem Schritt des Beurteilens die Verkehrssituation als unkritisch beurteilt wurde.

2. Verfahren (200) gemäß Anspruch 1, mit einem Schritt des Bestimmens (202) der relevanten Sprachäußerung (118), in dem ein vorbestimmtes Wort oder eine vorbestimmte Wortfolge erfasst und als relevante Sprachäußerung bestimmt wird, wenn das Wort mit einem in einer Datenbank hinterlegten Wort übereinstimmt oder die Wortfolge mit einer in der Datenbank hinterlegten Wortfolge übereinstimmt.

3. Verfahren (200) gemäß Anspruch 1, bei dem in dem Schritt des Bestimmens (202) ein vorbestimmtes Sprachschema erfasst und als relevante Sprachäußerung (118) bestimmt wird, wenn das Sprachschema mit einem in einer Datenbank hinterlegten Sprachschema übereinstimmt.

4. Verfahren (200) gemäß einem der vorangegangenen Ansprüche, bei dem in dem Schritt des Ermittelns (204) ein der relevanten Sprachäußerung (118) zugeordneter Vorschlag oder eine der relevanten Sprachäußerung zugeordnete Frage für den Insassen (104, 106) als die Ausgabeinformation (120) ermittelt wird.

5. Verfahren (200) gemäß einem der vorangegangenen Ansprüche, bei dem der Schritt des Bereitstellens (210) ansprechend auf ein Kommando des Insassen (104, 106) ausgeführt wird.

6. Verfahren (200) gemäß einem der vorangegangenen Ansprüche, das ansprechend auf ein Startkommando des Insassen (104, 106) gestartet wird.

7. Verfahren (200) gemäß einem der vorangegangenen Ansprüche, mit einem Schritt des Bewertens (208) einer aktuellen Informationsaufnahmekapazität des Insassen (104, 106), basierend auf zumindest einer Fahrzeuginnenrauminformation des zumindest einen Sensors des Fahrzeugs (100), wobei in dem Schritt des Bereitstellens (210) die Ausgabeinformation (120)ferner bereitgestellt wird, wenn in dem Schritt des Bewertens die aktuelle Informationsaufnahmekapazität als ausreichend bewertet wurde.

8. Verfahren (200) gemäß einem der vorangegangenen Ansprüche, mit einem Schritt des Erfassens (212) einer Antwortinformation des Insassen (104, 106) des Fahrzeugs (100), basierend auf einer weiteren relevanten Sprachäußerung (118) des Insassen, und einem Schritt des Deaktivierens (214) der Sprachinteraktion basierend auf dem Schritt des Erfassens der Antwortinformation.

9. Sprachinteraktionssystem (102) für ein Fahrzeug (100), das die folgenden Merkmale aufweist:
eine Einrichtung (110) zum Ermitteln einer Ausgabeinformation (120), basierend auf einer relevanten Sprachäußerung (118) eines Insassen (104, 106) des Fahrzeugs;
eine Einrichtung (112) zum Beurteilen einer aktuellen Verkehrssituation, basierend auf zumindest einer Fahrzeugumgebungsinformation zumindest eines Sensors des Fahrzeugs; und
eine Einrichtung (114) zum Bereitstellen der Ausgabeinformation an einer Schnittstelle zu einer Ausgabeeinrichtung (116) des Fahrzeugs, wenn die Einrichtung zum Beurteilen die Verkehrssituation als unkritisch beurteilt hat.

10. Computer-Programmprodukt mit Programmcode zur Durchführung des Verfahrens (200) nach einem der Ansprüche 1 bis 8, wenn das Programmprodukt auf einer Vorrichtung ausgeführt wird.
